# EUROPÄISCHE PATENTSCHRIFT

(11) **EP 1 148 744 B1**
(45) Veröffentlichungstag und Bekanntmachung des Hinweises auf die Patenterteilung: **25.02.2004**
(21) Anmeldenummer: 01440095.6
(22) Anmeldetag: 05.04.2001
(51) Int. Cl.: H04Q 3/00

(54) **Netzwerkserver**
Network server
Serveur de réseau

(30) Priorität: 20.04.2000 DE 10019727
(43) Veröffentlichungstag der Anmeldung: 24.10.2001
(73) Patentinhaber: ALCATEL, 75008 Paris (FR)
(72) Erfinder: Eisinger, Bernd, 3744 Stockern (AT); Mairbock, Harald, 1050 Wien (AT); Schweeger, Thomas, 1010 Wien (AT)
(74) Vertreter: Rausch, Gabriele, Dr.

(56) Entgegenhaltungen:
- WO-A-97/22209
- GB-A- 2 341 759
- US-A- 5 748 710

## Beschreibung

Die Erfindung betrifft einen Netzwerkserver zum Bereitstellen von Diensten in einem Fernsprechnetz, wobei der Netzwerkserver mit einer ersten Kommunikationseinheit zur Kommunikation mit Elementen des Fernsprechnetzes versehen ist.

Die Erfindung geht von der Bereitstellung von Diensten innerhalb eines Fernsprechnetzes mittels der IN Architektur (IN = Intelligent Network) aus. In US 5,345,502 ist die Bereitstellung eines solchen Dienstes durch einen Netzwerkserver beschrieben, der über eine Datenbank verfügt. In WO/22209 wird eine Bereitstellung eines in Dienstes beschrieben, dessen Ressourcen über das Internet erreichbar sind.

Mobilfunk-Endgeräte sind miteinander über ein Fernsprechnetz verbunden, das über Vermittlungsstellen verfügt, die die Funktion von Dienstvermittlungsstellen einer IN Architektur erbringen. Aufgrund einer in einer Verbindungsanforderung eingetragenen Dienstkennung initiieren diese Vermittlungsstellen den Aufbau einer Daten-Verbindung zu einem Netzwerkserver, der die Funktion einer Dienststeuereinrichtung in der IN Architektur erbringt. Der Netzwerkserver kann mittels Senden von Steuerbefehlen u. a. das Umleiten von Kommunikationsverbindung durch das Fernsprechnetz initiieren.

Um zwischen zwei Mobilfunk-Endgeräten eine Fernsprechverbindung durch das Fernsprechnetz aufzubauen, wird über die Daten-Verbindung die von dem Teilnehmer des rufenden Mobilfunk-Endgeräts gewählte Fernsprechrufnummer an den Netzwerkserver übermittelt. Der Netzwerkserver ermittelt sodann mittels einer Datenbank den Aufenthaltsort des Teilnehmers, dem diese Fernsprechrufnummer zugeordnet ist, und ermittelt sodann diesem Aufenthaltsort zugeordnete Wege-Informationen. Die so ermittelten Wege-Informationen werden über die Daten-Verbindung zurück an das rufende Mobilfunk-Endgerät gesendet, das sodann mittels dieser Wege-Informationen eine Fernsprechverbindung zu dem gerufenen Mobilfunk-Endgerät aufbaut.

Der Erfindung liegt nun die Aufgabe zugrunde, die Bereitstellung von weiteren, komplexeren Diensten durch einen Netzwerkserver zu ermöglichen.

Diese Aufgabe wird gelöst durch einen Netzwerkserver nach der Lehre von Anspruch 1.

Der Erfindung liegt hierbei der Gedanke zugrunde, mittels des Netzwerkservers einen persönlichen Netzwerkdienst anzubieten, der einem Benutzer eine erste Zugriffschnittstelle bereitstellt, über die er vorzugsweise mittels eines IP-Endgerätes (IP = Internet Protocol) eine persönliche, hierarchisch strukturierte Datenbasis mit einer persönlichen hierarchischen Datenstruktur in dem Netzwerkserver anlegen kann, und eine zweite Zugriffschnittstelle bereitstellt, über die der Benutzer Daten aus seiner persönlichen Datenbasis mittels eines Fernsprechendgerätes auslesen kann.

Der Vorteil der Erfindung besteht darin, daß sie die Realisierung einer Vielzahl von neuartigen, inhaltsbezogenen Dienstes in einem Fernsprechnetz ermöglicht. Weiter wird hierdurch die Benutzerfreundlichkeit des Fernsprechnetzes und der sich den Teilnehmern des Fernsprechnetzes bietende Mehrwert weiter erhöht.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein funktionelle Darstellung eines Kommunikationssystems mit einem erfindungsgemäßen Netzwerkserver für ein erstes Ausführungsbeispiel.
- Fig. 2: zeigt ein funktionelle Darstellung eines Kommunikationssystems mit einem erfindungsgemäßen Netzwerkserver für ein zweites Ausführungsbeispiel.

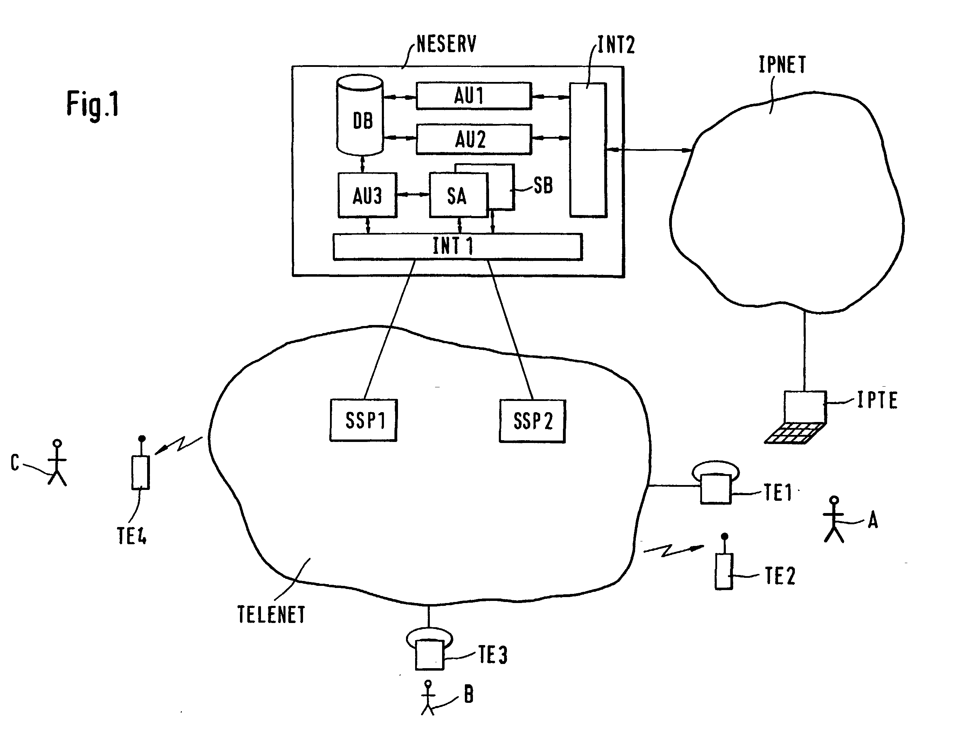

Fig. 1 zeigt zwei Kommunikationsnetz TELENET und IPNET, einen Netzwerkserver NESERV, fünf Endgeräte TE1, TE2, TE3, TE4, IPTE und drei Teilnehmer A, B, C des Kommunikationsnetzes TELENET. Die Endgeräte TE1, TE2 und IPTE sind dem Teilnehmer A, das Endgerät TE3 ist dem Teilnehmer B und das Endgerät TE4 ist dem Teilnehmer C zugeordnet. Die Anzahl der Endgeräte und der Teilnehmer sowie deren Zuordnung ist beispielhaft gewählt.

Das Kommunikationsnetz TELENET ist ein Fernsprechnetz. Es ermöglicht die Kommunikation zwischen den Endgeräten TE1 bis TE4. Das Kommunikationsnetz TELENET wird hier von einem Mobilfunknetz, beispielsweise von einem zellularen Mobilfunknetz nach dem GSM Standard (GSM = Global System Mobile Communication) und einem Festnetz, beispielsweise von einem ISDN Fernsprechnetz (ISDN = Integrated Services Digital Network) gebildet. Es ist auch möglich, daß das Kommunikationsnetz TELENET ein oder mehrere weitere Fernsprechnetze (Mobilfunk-Netze oder Festnetze) oder Datennetz (z. B. für voice over IP) mitumfaßt, die auch verschiedenen Netzbetreibern zugeordnet sein können.

Das Kommunikationsnetz TELENET weist mehrere besonders ausgestaltete Vermittlungsstellen auf, die eine Dienstvermittlungsfunktion gemäß einer IN Architektur (IN= Intelligent Network) erbringen. Von diesen Vermittlungsstellen sind in Fig. 1 beispielhaft zwei Dienstvermittlungsstellen SSP1 und SSP2 gezeigt.

Das Kommunikationsnetz IPNET ist ein IP-Netz, also ein Datennetz, das als Layer 3 Kommunikationsprotokoll das IP Protokoll (IP = Internet Protocol) verwendet. Bei dem Endgerät IPTE handelt es sich um ein Endgerät, das mit den notwendigen Kommunikationskomponenten zur Kommunikation über das Kommunikationsnetz IPNET ausgestattet ist. Es handelt sich bei dem Endgerät IPTE beispielsweise um einen Computer mit einem WEB-Browser, der mit einem Modem oder einer Netzwerkkarte ausgestattet ist.

Der Netzwerkserver NESERV stellt Netzdienste innerhalb des Kommunikationsnetzes TELENET zur Verfügung.

Der Netzwerkserver NESERV wird von einem oder von mehreren über ein Kommunikationsmedium verbundenen Rechnern gebildet, auf dem eine SW Systemplattform, bestehen beispielsweise aus einem Betriebssystem und einem Datenbanksystem, und Applikationsprogramme aufsetzen. Diese Applikationsprogramme steuern bei ihrem Ablauf auf der Systemplattform des Netzwerkserver NESERV die Funktionen des Netzwerkservers NESERV und Steueren damit die Erbringung der im Folgenden beschriebenen Funktionen des Netzwerkservers NESERV.

Aus funktioneller Sicht weist der Netzwerkserver eine Datenbank DB, zwei Kommunikationseinheiten INT1 und INT2, drei Zugriffseinheiten AU1 bis AU3 und zwei Dienstlogika SA und SB auf.

Die Kommunikationseinheit INT1 dient der Kommunikation mit Elementen des Kommunikationsnetzes TELENET, beispielsweise zur Kommunikation mit Dienstvermittlungsstellen oder Endgeräten des Kommunikationsnetzes TELENET.

Sie stellt hierzu die notwendigen Kommunikationsmechanismen zur Kommunikation mit den Dienstvermittlungsstellen SSP1 und SSP2 zur Verfügung. Der hierfür von der Kommunikationseinheit INT1 bearbeitete Protokollstack besteht aus Nr. 7 Protokollen, die als Transportprotokolle verwendet werden und aus einem darauf aufsetzenden INAP Protokoll (INAP = Intelligent Network Application Protocol). Es ist auch möglich, andere Transportprotokolle zu verwenden, beispielsweise ein ein ETHERNET Protokoll oder ein sonstiges LAN Protokoll (LAN = Local Area Network), auf dem ein IP Protokoll aufsetzt. Auch speziell an Mobilfunk-Netze angepaßte INAP Protokolle können verwendet werden. Weiter ist es auch möglich, daß die Kommunikationseinheit INT1 über diesen Protokollstack mit Dienstunterstützungssystemen (Intelligent Peripherals) kommuniziert, beispielsweise um eine Sprachausgabe an ein Endgerät des Kommunikationsnetzes TELENET zu aktivieren.

Innerhalb der IN Architektur erbringt der Netzwerkserver NESERV eine Dienststeuerfunktion, er stellt somit eine Dienststeuereinheit des Kommunikationsnetzes TELENET dar. Die für die Kommunikation Dienststeuerfunktion - Dienstvermittlungsfunktion notwendigen Funktion werden ebenfalls von der Kommunikationseinheit INT1 erbracht.

Die Kommunikationseinheit INT2 stellt die notwendigen Kommunikationsmechanismen zur Kommunikation über das Kommunikationsnetz IPNET bereit. Der Protokollstack für diese Kommunikation besteht beispielsweise aus einem LAN Protokoll (LAN = Local Area Network) oder ATM Protokoll (ATM = Asynchronous Transfer Modus), auf dem ein TCP/IP Protokollstack aufsetzt. (TCP = Transmission Control Protocol).

Die Datenbank DB dient dem Speichern von Daten gemäß verschiedener teilnehmerspezifischer hierarchischer Datenstrukturen. Die Datenbank DB weist somit beispielsweise eine Vielzahl von Datensätzen auf, die jeweils einem anderen Teilnehmer des Kommunikationsnetzes zugeordnet sind. Jede dieser Datensätze verfügt über eine eigene teilnehmerspezifische hierarchische Datenstruktur. Gemäß dieser Datenstruktur sind die Daten des jeweiligen Datensatzes in der Datenbank DB abgespeichert.

Die Zugriffseinheit AU1 gestattet es Teilnehmern des Kommunikationsnetzes TELENET mittels eines Endgerätes eine jeweilige teilnehmerspezifische, hierarchisch Datenstruktur in der Datenbank DB festzulegen.

Der Zugang auf die Zugangseinheit AU1 erfolgt vorzugsweise über die Kommunikationseinheit INT2, beispielsweise mittels des Endgerätes IPTE. Die Zugriffseinheit AU1 gestattet es somit IP-Endgeräten über die Kommunikationseinheit INT2 teilnehmerspezifische, hierarchische Datenstrukturen in der Datenbank DB festzulegen. Hierfür stellt die Zugangseinheit AU1 Teilnehmern ein WEB-Interface als Benutzeroberfläche zur Verfügung. Teilnehmer können so mittels eines IP-Endgerätes, das mit einem WEB Browser ausgestattet ist, mit der Zugangseinheit AU1 kommunizieren.

Der Zugang auf die Zugangseinheit AU1 kann jedoch auch mittels eines Endgeräts erfolgen, das das WAP Protokoll (WAP= Wireless Application Protocol) unterstützt, wenn die Zugangseinheit AU ein entsprechendes Benutzer-Interface zur Verfügung stellt. Es ist weiter möglich, daß die Zugriffseinheit AU1 anstelle eines derartigen, WEB basierten Benutzer-Interfaces oder zusätzlich zu dieser Art von Benutzer-Interface einen IN Dienst bereitstellt, der es ermöglicht, mittels eines normalen Endgerätes, vorzugsweise eines Mobilfunk-Endgerätes, mit der Zugangseinheit AU1 zur Festlegung teilnehmerspezifischer, hierarchischer Datenstrukturen in der Datenbank DB zu kommunizieren. In diesem Fall würde der Zugang auf die Zugangseinheit AU1 über die Kommunikationseinheit INT1 erfolgen.

Auf eine Anforderung von einem Endgerät, auf die Funktionen der Zugriffseinheit AU1 zugreifen zu wollen, ermittelt die Zugriffseinheit AU1 zuerst den Teilnehmer dieses Endgerätes. Dies kann beispielsweise dadurch realisiert werden, daß die Zugriffseinheit AU1 das Endgerät auffordert, eine teilnehmerspezifische oder endgerätespezifische Kennung an die Zugriffseinheit AU1 zu senden. Eine Kennung kann beispielsweise in einer dem Teilnehmer zugeordneten Fernsprechrufnummer oder in dem Namen des Teilnehmers bestehen. Es ist auch möglich, daß die Zugriffseinheit hierzu eine mit der Anforderung automatisch zugesendete Kennung auswertet.

Weiter ist es vorteilhaft, daß die Zugriffseinheit AU1 ein Autorisierung des Teilnehmers durchführt, beispielsweise indem sie das Endgerät auffordert, eine der Kennung zugeordnetes Kennwort zu senden oder eine Zufallszahl mit einem teilnehmerspezifischen oder endgerätespezifischen Schlüssel zu verschlüsseln.

Weiter ist es vorteilhaft, daß die Zugriffseinheit AU1 nach Ermittlung des Teilnehmers überprüft, ob der ermittelte Teilnehmer in einer Liste abgespeichert ist, in der für eine Inanspruchnahme des Netzwerkservers NESERV berechtigte Teilnehmer des Kommunikationsnetzes TELENET abgespeichert sind. Die Liste enthält beispielsweise diejenigen Teilnehmer des Kommunikationsnetzes TELENET, die den hier beschriebenen, von dem Netzwerkserver NESERV in dem Kommunikationsnetz TELENET bereitgestellten Dienst abonniert haben. Die Zugriffseinheit AU1 gestattet sodann den Zugriff auf die Datenbank DB nur dann, wenn der ermittelte Teilnehmer in dieser Liste abgespeichert ist.

Nach Ermittlung des Teilnehmer lokalisiert die Zugriffseinheit AU1 die teilnehmerspezifische, hierarchische Datenstruktur des ermittelten Teilnehmers innerhalb der Datenbank DB und gestattet dem Endgerät das Auslesen und das Verändern der in der Datenbank DB gespeicherten teilnehmerspezifischen, hierarchisch Datenstruktur des ermittelten Teilnehmers. Hierzu lokalisiert sie zuerst den Datensatz, der dem ermittelten Teilnehmer in der Datenbank zugeordnet ist und gestattet sodann dem Endgerät, die Datenstruktur dieses Datensatzes auszulesen und zu verändern. Sie gestattet es hierfür beispielsweise dem Teilnehmern, durch entsprechende Steuerbefehle mittels des Endgerätes neue Ebenen in der jeweilige teilnehmerspezifischen, hierarchischen Datenstruktur in der Datenbank DB anzulegen und/ oder neue Komponenten in der jeweilige teilnehmerspezifischen, hierarchischen Datenstruktur in der Datenbank DB anzulegen. Die Eingabe und das Veränderen der Datenstruktur kann hierbei auch über eine graphische Benutzeroberfläche durch "graphisches Programmieren" erfolgen.

Weiter ist es vorteilhaft, daß bereits eine Grund-Datenstruktur für den jeweiligen Teilnehmer festgelegt ist, die auf einfache Weise an die jeweiligen Bedürfnisse des Teilnehmers angepaßt werden kann: Es kann beispielsweise ein Datenstruktur mit drei Ebenen vordefiniert sein, die der Teilnehmer dadurch verändert, daß er neue Komponenten in diesen Ebenen erzeugt. Bei der Erzeugung einer Komponente definiert er beispielsweise, ob die jeweilig Komponente weiter strukturiert ist, oder ob sie als niedrigste Struktur beispielsweise ein Datenelement mit Text-Inhalt darstellt.

Weiter ist es vorteilhaft, wenn es das von der Zugriffseinheit AU 1 bereitgestellte Benuzter-Interface dem Endgerät durch senden von Steuerbefehlen ermöglicht,
- Text zu den jeweiligen Komponenten hinzuzufügen,
- Femsprechrufnummern für "click to dial" zu definieren, oder
- Startpunkte für eine (WAP-) Suche innerhalb einer jeden Ebene der Datenstruktur vorzudefinieren. Hierdurch wird es möglich, auf einfache Weise eine Schnellsuchfunktion zu realisieren.

Die Zugriffseinheit AU2 dient dazu, die von einem Endgerät eines Teilnehmers empfangenen Daten gemäß der jeweiligen teilnehmerspezifischen hierarchischen Datenstruktur dieses Teilnehmers in der Datenbank DB abzuspeichem.

Die Kommunikation von Endgeräten der Teilnehmer des Kommunikationsnetzes TELENET mit der Zugriffseinheit AU2 erfolgt hierbei auf die gleiche Weise wie die Kommunikation dieser Endgeräte mit der Zugriffseinheit AU1 nach Fig. 1. Auf eine Anforderung von einem Endgerät, auf die Funktionen der Zugriffseinheit AU2 zugreifen zu wollen, ermittelt die Zugriffseinheit AU2 zuerst den Teilnehmer dieses Endgerätes und lokalisiert sodann den Datensatz, der diesem Teilnehmer innerhalb der Datenbank DB zugeordnet ist. Dies kann in gleicher Weise wie bei der Zugriffseinheit AU1 nach Fig. 1 erfolgen. Anschließend stellt sie dem Endgerät ein Benutzer-Interface zur Eingabe und zum Verändern von Daten dieses Datensatzes im Rahmen der teilnehmerspezifischen, hierarchischen Datenstruktur dieses Datensatzes zur Verfügung. Entsprechend den über dieses Benutzer-Interface gegebenen Steuerbefehlen werden hierbei Daten in der Datenbank DB abgespeichert oder gelöscht.

Es ist hierbei vorteilhaft, die Funktionen der Zugriffseinheit AU2 unter derselben Benutzeroberfläche wie die der Zugriffseinheit AU1 anzubieten. In diesem Fall ist es vorteilhaft, die Zugriffseinheiten AU1 und AU2 als Teile ein und der selben SW Komponente zu realisieren.

Die Zugriffseinheit AU3 ermittelt auf eine Datenanforderung von einem Endgeräte des Kommunikationsnetzes TELENET den Teilnehmer dieses Endgerätes. Dies kann auf die gleiche Weise wie bei der Ermittlung des Teilnehmers durch die Zugriffseinheit AU1 erfolgen. Sodann gestattet die Zugriffseinheit AU3 dem Endgerät das Auslesen der gemäß der teilnehmerspezifischen, hierarchischen Datenstruktur des ermittelten Teilnehmers in der Datenbank DB abgespeicherten Daten. Die hierbei ausgelesenen Daten werden von der Zugriffseinheit AU3 mittels der ersten Kommunikationseinheit INT1 an Elemente des Kommunikationsnetzes TELENET besendet. Beispielsweise können die ausgelesenen Daten als Teil eines Steuerbefehls an die Dienstvermittlungsstellen SSP1 und SSP2 gesendet werden.

Bei der Erbringung dieser Funktionen kommuniziert das Endgerät über die Kommunikationseinheit INT1 mit der Zugangseinheit AU3. Die Zugriffseinheit AU3 stellt somit einen IN Dienst bereitstellt, der es ermöglicht, mittels eines normalen Endgerätes, vorzugsweise eines Mobilfunk-Endgerätes, über die Zugriffseinheit AU3 auf die Datenbank DB zuzugreifen und Daten aus der Datenbank DB auszulesen.

Es ist auch möglich, daß die Zugangseinheit AU3 den von ihr angebotenen Dienst auch anderen IN-Dienstlogika des Netzwerkservers NESERV, beispielsweise den Dienstlogika SA und SB anbietet oder bei der Durchführung ihrer Funktion solche Dienstlogika triggert. Dadurch ist es möglich, eine Vielzahl unterschiedlicher Dienste mit einer sehr effizienten Auslastung der SW Komponenten zu realisieren.

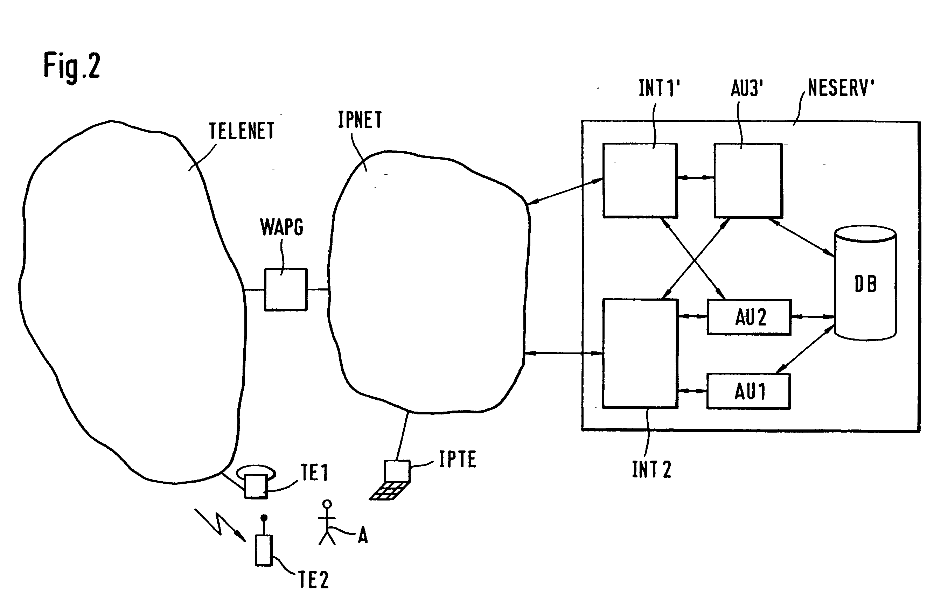

Anhand von Fig. 2 wird nun der Aufbau eines Netzwerkservers gemäß eines weiteren Ausführungsbeispiels erläutert.

Fig. 2 zeigt die Kommunikationsnetze TELENET und IPNET sowie einen Netzwerkserver NESERV' und die dem Teilnehmer A zugeordneten Endgeräte TE1, TE2 und IPTE.

Die Kommunikationsnetz TELENET und IPNET sind wie die Kommunikationsnetz TELENET und IPNET nach Fig. 1 ausgestaltet. Sie sind über ein WAP-Gateway WAPG miteinander verbunden. Das WAP-Gateway WAPG führt hierbei eine Übersetzung "normaler" Internet Dokumente in Dokumente nach dem WAP Standard durch.

Der Netzwerkserver NESERV' ist ein Internet-Server, der mittels des WAP Protokolls Dienste in dem Kommunikationsnetz TELENET bereitstellt. Das Mobilfunk-Endgerät TE2 ist mit einer zusätzlichen Funktionalität ausgerüstet, die es ihm ermöglich, mittels des WAP Protokolls über das WAP-Gateway WAPG mit dem Netzwerkserver NESERV' zu kommunizieren. Es ist hierbei bei entsprechender Ausgestaltung des Netzwerkservers NESERV' auch möglich, auf das WAP-Gateway WAPG zu verzichten.

Der Netzwerkserver NESERV' ist bis auf die im Folgenden geschilderten Unterschiede wie der Netzwerkserver NESERV nach Fig. 1 aufgebaut.

Der Netzwerkserver NESERV' weist aus funktioneller Sicht eine Kommunikationseinheit INT1' und eine Zugangseinheit AU3' sowie die Zugangseinheiten AU1 und AU2, die Datenbank DB und die Kommunikationseinheit INT2 auf, die entsprechend nach Fig. 1 ausgestaltet sind.

Die Kommunikationseinheit INT1' verfügt über die notwendigen Funktionseinheiten zur Kommunikation über das Kommunikationsnetz IPNET. Weiter steuert es den Dialog mit dem Mobilfunk-Endgerät TE2 und stellt die notwendigen Kommunikationsfunktionen zur Bereitstellung eines WAP basierten Dienstes innerhalb des Kommunikationsnetzes TELENET bereit. Je nach Ausstattung der Kommunikationseinheit INT1' ist es hierbei möglich, auf das WAP-Goteway WAPG zu verzichten. Bei entsprechender Ausgestaltung der Kommunikationseinheit INT1' ist es so beispielsweise möglich, den Netzwerkserver NESERV' direkt mit dem Kommunikationsnetz TELENET zu verbinden.

In dem Mobilfunk-Endgerät TE2 ist entweder ein spezieller Client mit einem speziellen Benutzer-Interface für die Kommunikation mit der Zugangseinheit AU3' vorinstalliert oder das Mobilfunk-Endgerät TE2 verfügt über einen Browser, auf den von dem Netzwerkserver NESERV' eine entsprechende Eingabeseite zur Eingabe von Daten-Querries heruntergeladen wird. Auch ein interaktiver Dialog mit der Zugriffseinheit AU3' kann über ein derart gestaltetes Benutzer-Interface ermöglicht werden.

Die Zugangseinheit AU3' ist wie die Zugangseinheit AU3 nach Fig. 1 ausgestaltet, mit dem Unterschied, daß die Kommunikation mit-Endgeräten von Teilnehmern des Kommunikationsnetzes TELENET nicht mittels IN Mechanismen, sonder wie dies oben geschildert wird, mittels einer WAP basierten Kommunikation realisiert ist. Entsprechend bietet die Zugangseinheit AU3' Endgeräten des Kommunikationsnetzes TELENET ein WAP basiertes Benutzer-Interface an, das wie oben dargestellt ausgestaltet sein kann.

Hierbei ist es insbesondere auch möglich, daß die von der Datenbank DB ausgelesenen Informationen mittels der oben beschriebenen, innerhalb der ausgewählten Komponente vordefinierter "click to call" Fernsprechnummern mit dem Aufbau von Fernsprech-Verbindungen verknüpft werden. Der Datenzugriff auf die Datenbank DB und der Aufbau von Verbindungen durch das Kommunikationsnetz TELENET kann damit auf vorteilhafte Weise miteinander verknüpft werden. Der Steuerbefehl zum Aufbau der Verbind kann direkt von der Zugriffseinheit AU3' aus erfolgen. Der Aufbau von Verbindungen kann auch automatisch vom Endgerät initiiert werden.

## Patentansprüche

1. Netzwerkserver (NESERV, NESERV') zum Bereitstellen von Diensten in einem Fernsprechnetz (TELENET), wobei der Netzwerkserver (NESERV, NESERV') mit einer ersten Kommunikationseinheit (INT1, INT1') zur Kommunikation mit Elementen (SSP1, SSP2; TE1, TE2) des Fernsprechnetzes (TELENET) versehen ist,
**dadurch gekennzeichnet, daß** der Netzwerkserver (NESERV, NESERV') mit einer Datenbank (DB) zum Speichern von Daten gemäß verschiedener teilnehmerspezifischer hierarchischer Datenstrukturen versehen ist, daß der Netzwerkserver (NESERV, NESERV') mit einer ersten Zugriffseinheit (AU 1) versehen ist, die so ausgestaltet ist, daß sie es Teilnehmern (A) des Fernsprechnetzes (TELENET) gestattet, mittels eines Endgerätes (IPTE) eine dem jeweiligen Teilnehmer zugeordnete teilnehmerspezifische, hierarchische Datenstruktur in der Datenbank (DB) festzulegen, daß der Netzwerkserver (NESERV, NESERV') mit einer zweiten Zugriffseinheit (AU2) versehen ist, die so ausgestaltet ist, daß sie von einem Endgerät (IPTE) eines Teilnehmers (A) empfangene Daten gemäß der jeweiligen teilnehmerspezifischen hierarchischen Datenstruktur dieses Teilnehmers in der Datenbank (DB) abspeichert, und daß der Netzwerkserver (NESERV, NESERV') mit einer dritten Zugriffseinheit (AU3) versehen ist, die so ausgestaltet ist, daß sie auf eine Datenanforderung von einem Endgerät (TE1 bis TE4) des Fernsprechnetzes (TELENET) den Teilnehmer (A, B, C) dieses Endgerätes (TE1 bis TE4) ermittelt, dem Endgerät (TE1 bis TE4) das Auslesen der gemäß der teilnehmerspezifischen, hierarchischen Datenstruktur des ermittelten Teilnehmers (A, B, C) in der Datenbank (DB) abgespeicherten Daten gestattet und hierbei die ausgelesenen Daten mittels der ersten Kommunikationseinheit (INT1, INT1') an Elemente (SSP1, SSP2; TE1 bis TE4) des Fernsprechnetzes (TELENET) sendet.

2. Netzwerkserver (NESERV, NESERV') nach Anspruch 1, **dadurch gekennzeichnet, daß** die ersten Zugriffseinheit (AU1) weiter so ausgestaltet ist, daß sie auf eine Anforderung von einem Endgerät (IPTE) den Teilnehmer (A) dieses Endgerätes (IPTE) ermittelt, daß sie sodann die teilnehmerspezifische, hierarchische Datenstruktur des ermittelten Teilnehmers (A) innerhalb der Datenbank (DB) lokalisiert, und daß sie sodann dem Endgerät (IPTE) das Auslesen und das Verändern der in der Datenbank (DB) gespeicherten teilnehmerspezifischen, hierarchischen Datenstruktur des ermittelten Teilnehmers (A) gestattet.

3. Netzwerkserver (NESERV, NESERV') nach Anspruch 1, **dadurch gekennzeichnet, daß** die ersten Zugriffseinheit (AU1) weiter so ausgestaltet ist, daß sie auf eine Anforderung von einem Endgerät (IPTE) den Teilnehmer (A) dieses Endgerätes (IPTE) ermittelt, daß sie überprüft, ob der ermittelte Teilnehmer (A) in einer Liste abgespeichert ist, in der für eine Inanspruchnahme des Netzwerkservers (NESERV, NESERV') berechtigte Teilnehmer des Fernsprechnetzes (TELENET) abgespeichert sind, und daß sie den Zugriff auf die Datenbank (DB) nur gestattet, wenn der ermittelte Teilnehmer in dieser Liste abgespeichert ist.

4. Netzwerkserver (NESERV, NESERV') nach Anspruch 1, **dadurch gekennzeichnet, daß** die ersten Zugriffseinheit (AU1) weiter so ausgestaltet ist, daß sie es Teilnehmern (A) des Fernsprechnetzes (TELENET) gestattet, mittels eines Endgerätes (IPTE) neue Ebenen in der jeweiligen teilnehmerspezifischen, hierarchischen Datenstruktur des jeweiligen Teilnehmers (A) in der Datenbank (DB) anzulegen.

5. Netzwerkserver (NESERV, NESERV') nach Anspruch 1, **dadurch gekennzeichnet, daß** die ersten Zugriffseinheit (AU1) weiter so ausgestaltet ist, daß sie es Teilnehmern (A) des Fernsprechnetzes (IPNET) gestattet, mittels eines Endgerätes (IPTE) neue Komponenten in der jeweiligen teilnehmerspezifischen, hierarchischen Datenstruktur des jeweiligen Teilnehmers (A) in der Datenbank (DB) anzulegen.

6. Netzwerkserver (NESERV, NESERV') nach Anspruch 1, **dadurch gekennzeichnet, daß** der Netzwerkserver mit einer zweiten Kommunikationseinheit (INT2, INT2') zur Kommunikation mit Endgeräten (IPTE) eines IP-Netzes (IPNET) versehen ist und daß die erste Zugriffseinheit (AU1) weiter so ausgestaltet ist, daß sie es IP-Endgeräten (IPTE) über die zweite Kommunikationseinheit (INT2, INT2') gestattet, teilnehmerspezifische, hierarchisch Datenstrukturen in der Datenbank (DB) festzulegen.

7. Netzwerkserver (NESERV) nach Anspruch 1, **dadurch gekennzeichnet, daß** die erste Kommunikationseinheit (INT1) weiter so ausgestaltet ist, daß sie über Dienstvermittlungsstellen (SSP1, SSP2) des Fernsprechnetzes (TELENET) mit Fernsprechendgeräten (TE1 bis TE4) des Fernsprechnetzes kommuniziert.

8. Netzwerkserver (NESERV') nach Anspruch 1, **dadurch gekennzeichnet, daß** die erste Kommunikationseinheit (INT1') so ausgestaltet ist, daß sie mit Mobilfunk-Endgeräten (TE2) des Fernsprechnetzes mittels des WAP Protokolls kommuniziert.

9. Netzwerkserver (NESERV) nach Anspruch 1, **dadurch gekennzeichnet, daß** der Netzwerkserver (NESERV) eine Dienststeuereinheit des Fernsprechnetzes (TELENET) ist, die einen IN Dienst im Fernsprechnetz (TELENET) bereitstellt.

10. Netzwerkserver (NESERV') nach Anspruch 1, **dadurch gekennzeichnet, daß** der Netzwerkserver (NESERV') ein Internet-Server ist, der mittels des WAP Protokolls Dienste in dem Fernsprechnetz (TELENET) bereitstellt.

## Claims

1. Network server (NESERV, NESERV') for the provision of services in a telephone network (TELENET), wherein the network server (NESERV, NESERV') is provided with a first communications unit (INT1, INT1') for communication with elements (SSP1, SSP2; TE1, TE2) of the telephone network (TELENET),
**characterised in that** the network server (NESERV, NESERV') is provided with a database (DB) for storing data in accordance with various subscriber-specific hierarchical data structures, that the network server (NESERV, NESERV') is provided with a first access unit (AU1) which is configured so that it allows subscribers (A) of the telephone network (TELENET), by means of a terminal (IPTE), to specify a subscriber-specific hierarchical data structure in the database (DB) that is assigned to the respective subscriber, that the network server (NESERV, NESERV') is provided with a second access unit (AU2) which is configured so that it stores data received by a terminal (IPTE) of a subscriber (A) in the database (DB) in accordance with this subscriber's respective subscriber-specific hierarchical data structure, and that the network server (NESERV, NESERV') is provided with a third access unit (AU3) which is configured so that, on a data request by one of the terminal (TE1 to TE4) of the telephone network (TELENET), it determines the subscribers (A, B, C) of this terminal (TE1 to TE4), allows the terminal (TE1 to TE4) to read out the data stored in the database (DB) in accordance with the subscriber-specific hierarchical data structure of the detected subscriber (A, B, C) and in so doing sends the read-out data by means of the first communications unit (INT1, INT1') to elements (SSP1, SSP2; TE1 to TE4) of the telephone network (TELENET).

2. Network server (NESERV, NESERV') according to Claim 1, **characterised in that** the first access unit (AU1) is further configured so that, on a request from a terminal (IPTE) it determines the subscriber (A) of this terminal (IPTE), that it then locates the subscriber-specific hierarchical data structure of the detected subscriber (A) within the database (DB), and that it then allows the terminal (IPTE) to read out and modify the subscriber-specific hierarchical data structure of the detected subscriber (A) stored in the database (DB).

3. Network server (NESERV, NESERV') according to Claim 1, **characterised in that** the first access unit (AU1) is further configured so that, on a request from a terminal (IPTE), it determines the subscriber (A) of this terminal (IPTE), that it checks whether the detected subscriber (A) is stored in a list in which authorised subscribers of the telephone network (TELENET) are stored for utilisation by the network server (NESERV, NESERV'), and that it only allows access to the database (DB) if the detected subscriber is stored in this list.

4. Network server (NESERV, NESERV') according to Claim 1, **characterised in that** the first access unit (AU1) is further configured so that it allows subscribers (A) of the telephone network (TELENET), by means of a terminal (IPTE), to create new levels in the respective subscriber-specific hierarchical data structure of the respective subscriber (A) in the database (DB).

5. Network server (NESERV, NESERV') according to Claim 1, **characterised in that** the first access unit (AU1) is further configured so that it allows subscribers (A) of the telephone network (IPNET), by means of a terminal (IPTE), to create new components in the respective subscriber-specific hierarchical data structure of the respective subscriber (A) in the data base (DB).

6. Network server (NESERV, NESERV') according to Claim 1, **characterised in that** the network server is provided with a second communications unit (INT2, INT2') for communication with terminals (IPTE) of an IP network (IPNET) and that the first access unit (AU1) is further configured so that it allows IP terminals (IPTE), via the second communications unit (INT2, INT2'), to specify subscriber-specific hierarchical data structures in the database (DB).

7. Network server (NESERV) according to Claim 1, **characterised in that** the first communications unit (INT1) is further configured so that it communicates with telephone terminals (TE1 to TE4) of the telephone network via service switching centres (SSP1, SSP2) of the telephone network (TELENET).

8. Network server (NESERV') according to Claim 1, **characterised in that** the first communications unit (INT1') is configured so that it communicates with mobile radio terminals (TE2) of the telephone network by means of the WAP protocol.

9. Network server (NESERV) according to Claim 1, **characterised in that** the network server (NESERV) is a service control unit of the telephone network (TELENET), which provides an IN service in the telephone network (TELENET).

10. Network server (NESERV') according to Claim 1, **characterised in that** the network server (NESERV') is an Internet server that provides services in the telephone network (TELENET) by means of the WAP protocol.

## Revendications

1. Serveur de réseau (NESERV, NESERV') pour la mise à disposition de services dans un réseau téléphonique (TELENET), moyennant quoi le serveur de réseau (NESERV, NESERV') est muni d'une première unité de communication (INT1, INT1') pour la communication avec les éléments (SSP1, SSP2 ; TE1, TE2) du réseau téléphonique (TELENET), **caractérisé en ce que** le serveur de réseau (NESERV, NESERV') est muni d'une base de données (DB) pour enregistrer les données selon différentes structures de données hiérarchisées spécifiques à l'abonné, **en ce que** le serveur de réseau (NESERV, NESERV') est muni d'une première unité d'accès (AU1) conçue de façon à permettre à des abonnés (A) du réseau téléphonique (TELENET) de fixer, à l'aide d'un terminal (IPTE), une structure de données hiérarchisée spécifique à l'abonné correspondant à l'abonné dans la base de données (DB), **en ce que** le serveur de réseau (NESERV, NESERV') est muni d'une deuxième unité d'accès (AU2) conçue de façon à enregistrer les données reçues par un terminal (IPTE) d'un abonné (A) selon la structure de données hiérarchisée spécifique à l'abonné de cet abonné dans la base de données (DB) et **en ce que** le serveur de réseau (NESERV, NESERV') est muni d'une troisième unité d'accès (AU3) conçue de façon à identifier, lorsqu'un terminal (TE1 à TE4) du réseau téléphonique (TELENET) demande des données, l'abonné (A, B, C) de ce terminal (TE1 à TE4), permet au terminal (TE1 à TE4) la lecture des données enregistrées selon la structure de données hiérarchisée spécifique à l'abonné de l'abonné identifié (A, B, C) dans la base de données (DB) et envoie les données lues, à l'aide de la première unité de communication (INT1, INT1'), vers les éléments (SSP1, SSP2 ; TE1 à TE4) du réseau téléphonique (TELENET).

2. Serveur de réseau (NESERV, NESERV') selon la revendication 1, **caractérisé en ce que** la première unité d'accès (AU1) est conçue de façon à identifier, à la demande d'un terminal (IPTE), l'abonné (A) de ce terminal (IPTE), **en ce qu'**elle localise alors la structure de données hiérarchisée spécifique à l'abonné de l'abonné identifié (A) à l'intérieur de la base de données (DB) et **en ce qu'**elle permet alors au terminal (IPTE) la lecture et la modification de la structure de données hiérarchisée spécifique à l'abonné de l'abonné identifié (A) dans la base de données (DB).

3. Serveur de réseau (NESERV, NESERV') selon la revendication 1, **caractérisé en ce que** la première unité d'accès (AU1) est conçue de façon à identifier, à la demande d'un terminal (IPTE), l'abonné (A) de ce terminal (IPTE), **en ce qu'**elle vérifie si l'abonné identifié (A) est enregistré dans une liste dans laquelle les abonnés du réseau téléphonique (TELENET) autorisés à utiliser le serveur de réseau (NESERV, NESERV') sont enregistrés, et **en ce que** qu'elle ne permet l'accès à la base de données (DB) que lorsque l'abonné identifié est enregistré dans cette liste.

4. Serveur de réseau (NESERV, NESERV') selon la revendication 1, **caractérisé en ce que** la première unité d'accès (AU1) est conçue de façon à permettre aux abonnés (A) du réseau téléphonique (TELENET), à l'aide d'un terminal (IPTE), de créer de nouveaux niveaux dans la structure de données hiérarchisée spécifique à l'abonné de l'abonné (A) concerné dans la base de données (DB).

5. Serveur de réseau (NESERV, NESERV') selon la revendication 1, **caractérisé en ce que** la première unité d'accès (AU1) est conçue de façon à permettre aux abonnés (A) du réseau téléphonique (TELENET), à l'aide d'un terminal (IPTE), de créer de nouveaux composants dans la structure de données hiérarchisée spécifique à l'abonné de l'abonné (A) concerné dans la base de données (DB).

6. Serveur de réseau (NESERV, NESERV') selon la revendication 1, **caractérisé en ce que** le serveur de réseau est muni d'une deuxième unité de communication (INT2, INT2') pour la communication avec des terminaux (IPTE) d'un réseau IP (IPNET) et **en ce que** la première unité d'accès (AU1) est conçue de façon à permettre aux terminaux IP (IPTE) de fixer des structures de données spécifiques à l'abonné dans la base de données (DB) par l'intermédiaire de l'unité de communication (INT2, INT2').

7. Serveur de réseau (NESERV) selon la revendication 1, **caractérisé en ce que** la première unité de communication (INT1) est conçue de façon à communiquer avec des terminaux téléphoniques (TE1 à TE4) du réseau téléphonique par l'intermédiaire de centraux de services (SSP1, SSP2) du réseau téléphonique (TELENET).

8. Serveur de réseau (NESERV') selon la revendication 1, **caractérisé en ce que** la première unité de communication (INT1') est conçue de façon à communiquer avec des terminaux de téléphonie mobile (TE2) du réseau téléphonique à l'aide du protocole WAP.

9. Serveur de réseau (NESERV) selon la revendication 1, **caractérisé en ce que** le serveur de réseau (NESERV) est une unité de commande de services du réseau téléphonique (TELENET) qui met à disposition un service IN dans le réseau téléphonique (TELENET).

10. Serveur de réseau (NESERV') selon la revendication 1, **caractérisé en ce que** le serveur de réseau (NESERV') est un serveur Internet qui met des services IN à disposition dans le réseau téléphonique (TELENET) à l'aide du protocole WAP.
